# EUROPEAN PATENT APPLICATION

(11) **EP 4 300 885 A1**
(43) Date of publication of application: **03.01.2024**
(21) Application number: 22182540.9
(22) Date of filing: 01.07.2022
(51) Int. Cl.: H04L 9/40, H04W 4/40, H04W 12/0433

(54) **SECURE ELEMENT, TRUSTED AUTHORITY, DEVICE, KEY MANAGEMENT SERVER, BACKEND, METHOD AND COMPUTER PROGRAM**

(71) Applicant: Bayerische Motoren Werke Aktiengesellschaft, 80809 München (DE)
(72) Inventor: Knott, Thorsten, 83104 Tuntenhausen (DE); Hippler, Marco, 81541 München (DE)

(57) **Abstract**

Embodiments relate to a device for improving an authorization process, comprising interface circuitry configured to communicate with a database and processing circuitry configured to control the interface circuitry. Further, the processing circuitry is configured to transmit a request for identification information of a secure element to the database and receive an identification signal comprising information indicative of the identification information from the database. The identification information may comprise at least one of an identifier of the secure element or a user binding.

## Description

The present disclosure relates to the field of digital identity authorization. Embodiments relate to a secure element, a trusted authority, a device, a key management server, a backend, a method and a computer program.

Authorization processes enables a user of a device to enable certain functionality with his device, e.g., validate a bank transfer, validate a generation of a digital key, etc. For example, the use of a digital key enables a user of a vehicle to open it particularly easily. In particular, smart access can be used to configure a user device to act as a digital key for a vehicle. For this purpose, an invitation for a digital key, also called a data key, can be passed on to a friend device by the user device for configuration of the friend device. This allows the friend device to be configured/authenticated in such a way that access, for example opening, starting, etc. of the vehicle is enabled via wireless communication, for example Bluetooth or ultra-wideband technology (UWB).

The Digital Car Key solution currently defined in the Car Connectivity Consortium's (CCC) standard release 3 ([1]) standardizes an access system consisting of
a) a user device, e.g., a smartphone, a tablet, and software that;
   i) carry a digital key embedded in secure storage on the smart device;
   ii) offer interfaces from the secure storage to the smartphone operating system; and
   iii) offer interfaces from the smartphone operating system to other applications running on the smartphone (e.g. an app of an original equipment manufacturer (OEM).
b) a vehicle, allowing a user/owner of a digital key to operate certain vehicle functionalities ; and
c) a backend system, interconnecting the smart device and the vehicle allowing to share and manage digital keys and offer additional services.

Following the CCC standard release 2 ff. digital keys for a particular vehicle can be shared by entities (also referred to as "sharer"/"owner") having appropriate administration rights for that vehicle to entities conforming with the digital key specification that have been whitelisted/certified as recipients by the vehicle OEM (Device certificate authority (CA) signed by a device OEM CA and cross-signed by a vehicle CA).

A Key sharing is a multi-step process, in which the sharer first configures the parameters of the digital key to be created ("key creation request") and passes them to the friend device (also referred to as "sharee"). After creation of the key by the sharee and the export of an "endpoint certificate" containing the parameters the digital key has been created with, the sharer attests that the key has been created according to the key creation request by signing the endpoint certificate with its private key ("key sharing attestation"). However, only a validation of specific key configuration parameters is performed before the attestation is signed by the sharer. Thus, attacks on the sharee or the communication channel used for transmitting the invitation/key creation request can be exploited by an attacker to reroute a digital key to an attacker device.

A currently defined authorization process to prevent these attacks uses a second factor (e.g., vehicle or device entered PIN/One Time Password) that has to be passed from the sharer to the sharee out of band (e.g., via a voice call). However, this may negatively impact a user experience and does not cover all use cases (e.g., app based key deployment by servers). Thus, there may be a need to improve an authorization process between a sharer and a sharee.

It is therefore a finding that an authorization can be improved by using a signal comprising information indicative of a user binding to a secure element (of the sharee). For example, a trusted authority may perform a user binding such that the secure element is associated with a user. For example, the user binding is performed by identifying the secure element of a smartphone of a user as the secure element of the user. This way, an invitation to generate an authorization key can be bounded to a secure element. For example, the sharer can receive information about a secure element (of the sharee) which is associated to a user, e.g., a friend, who should receive a digital key, and can generate and transmit an invitation, which can only be used to generate a signable authorization key by the secure element associated to the friend. Thus, the sharer can check that the key has actually been created by the intended sharee, e.g., on a device associated with the intended recipient.

Examples provide a secure element of a user equipment for improving an authorization process, comprising interface circuitry configured to communicate with a trusted authority and processing circuitry configured to control the interface circuitry and to receive a signal from the trusted authority. The signal comprises information indicative of a user binding to the secure element. This way, a secure element can be associated with a user and/or unique data of the user, e.g., with an identity, a phone number, a bank account and the secure element can be informed about a performed user binding.

In an example, the processing circuitry may be further configured to receive, from a device, an invitation signal comprising information indicative of an invitation to generate an authorization key and to generate an authorization key based on the received signal. The authorization key may be a digital key. This way, an authorization key, e.g., a digital key for a vehicle, can be generated by the secure element. A check of the generated authorization key can be performed by utilizing identification information of the user binding.

Examples provide a trusted authority for improving an authorization process, comprising interface circuitry configured to communicate with a secure element and processing circuitry configured to control the interface circuitry and to receive an identifier signal from the secure element. The identifier signal comprises information indicative of an identifier of the secure element. Further, the processing circuitry is configured to perform a user binding of the secure element. This way, a secure element can be bounded to a distinct user.

In an example, the processing circuitry may be further configured to store information about the user binding in an instance certificate authority certificate. This way, a secure element used for a generation of an authorization key can be checked by using the instance certificate authority certificate.

Examples provide a device for improving an authorization process, comprising interface circuitry configured to communicate with a database and processing circuitry configured to control the interface circuitry. Further, the processing circuitry is configured to transmit a request for identification information of a secure element to the database and receive an identification signal comprising information indicative of the identification information from the database. The identification information may comprise at least one of an identifier of the secure element (e.g., a public key of a key pair (comprising also a private key) generated by the secure element) or a user binding information (e.g., an identifier associated to a user/owner). This way, the device can request identification information from a database, e.g., a trusted authority, which can be used to validate a process of a generation of an authorization key.

In an example, the interface circuitry may be further configured to communicate with a secure element (e.g., a secure element as described above). The processing circuitry may be further configured to transmit to the secure element an invitation signal comprising information indicative of an invitation to generate an authorization key, receive, from the secure element, a key signing request comprising information about a secure element used to generate an authorization key and check whether the information about the secure element matches the identification information and if the information matches indicate the authorization key as valid. This way, the device, e.g., a sharer, can validate a generated authorization key with respect to the secure element used for generating the authorization key.

In an example, the device may further comprise a storage device. The database from which the identification information is to be requested may be stored in the storage device. This way, the device can request the identification information in an eased way, e.g., without needing a wireless connection to an external database such like a server.

In an example, the interface circuitry may be further configured to communicate with a key management server. The processing circuitry may be further configured to transmit, to the key management server, a request to create an invitation signal. The request comprises information indicative of the identification information and receive, from the key management server, a request response signal comprising information indicative for the invitation signal. This way, the task of generating an invitation signal can be shifted to the key management server.

Examples provide a key management server for improving an authorization process, comprising interface circuitry configured to communicate with a secure element and a device according to one of the claims 5 - 8 and processing circuitry configured to control the interface circuitry. Further, the processing circuitry is configured to receive, from the device, a request to create an invitation signal. The request comprises information indicative of identification information. Further, the processing circuitry is configured to transmit a request response signal comprising information indicative for the invitation signal, receive, from the secure element, a key signing request comprising information about a secure element used to generate an authorization key and compare the secure element information with the identification information. This way, the key management server can perform a signation of the authorization key generated by a secure element.

Examples provide a backend for improving an authorization process, comprising interface circuitry configured to communicate with a secure element device and a device according to one of the claims 5 - 8 and processing circuitry configured to control the interface circuitry. Further, the processing circuitry is configured to receive an identification signal, from the device, comprising information indicative of the identification information from, receive, from the secure element, a key signing request comprising information about a secure element used to generate an authorization key and compare the secure element information with the identification information. This way, the backend can perform a signation of the authorization key generated by a secure element.

Examples provide a method improving an authorization process, comprising transmitting a request for identification information of a secure element to a database and receiving, from the database, an identification signal comprising information indicative of the identification information. The identification information may comprise at least one of an identifier of the secure element (e.g., a public key of a key pair (comprising also a private key) generated by the secure element) or a user binding information.. Further, the method comprises receiving, from the secure element, a key signing request comprising information about a secure element used to generate an authorization key and comparing the secure element information with the identification information.

Some examples of apparatuses, methods and/or computer programs will be described in the following by way of example only, and with reference to the accompanying figures, in which
Fig. 1 shows a block diagram of an example of a secure element;
Fig. 2 shows a block diagram of an example of a trusted authority;
Fig. 3 shows a block diagram of an example of a device;
Fig. 4 shows a block diagram of an example of a key management server;
Fig. 5 shows a block diagram of an example of a backend;
Figs. 6a - 6c show flow diagrams of an example of a method 600 of an authorization key sharing flow; and
Fig. 7 shows an example of a method.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

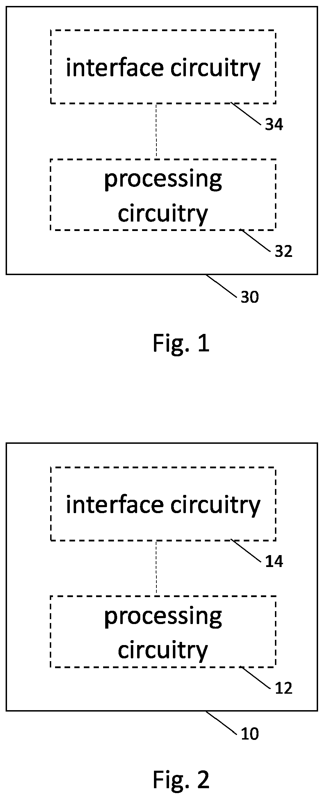

Fig. 1 shows a block diagram of an example of a secure element 30. The secure element 30 of a user equipment for improving an authorization process comprises interface circuitry 32 configured to communicate with a trusted authority and processing circuitry 34 configured to control the interface circuitry and to receive a signal from the trusted authority. The signal comprises information indicative of a user binding to the secure element 30. This way, a secure element 30 can be associated with a user and/or unique data of the user, e.g., with an identity, a phone number, a bank account and the secure element 30 can be informed about a performed user binding.

For example, the user binding may be a binding process wherein a user of the secure element 30, e.g., a user of the user equipment comprising the secure element 30, e.g., a sharee, may be bound to the secure element 30. For example, the user binding may allow a distinct identification of a user of the user equipment. For example, during a user binding a key pair (e.g., comprising a public key and a private key) may be generated in the secure element 30. The secure element may transmit the public key to a trusted authority. The trusted authority may generate a certificate to indicate that the public key (and the corresponding private key) was generated by the processing circuitry 34 of the secure element 30.

A user of the user equipment may be an owner of the user equipment. Optionally or alternatively a user of the user equipment can be a person who can use the user equipment, e.g., by unlock the user device, storing personal information on the user equipment. For example, a plurality of persons can be assigned as user for the user equipment. In this case, the user binding would comprise information about each person of the plurality of persons.

For example, to perform a user binding a unique information about the user of the user equipment may be needed, e.g., a mail address, a phone number, an identity certificate. With this information the secure element 30 of the user equipment can be assigned by the user binding to the user. Thus, the user binding may allow a distinct identification of a user (or a plurality of users), e.g., an owner, of the user equipment.

Therefore, by utilizing the user binding a secure element 30 can be assigned to a user and a check can be performed if a secure element 30 used for generating an authorization key is a secure element 30, which was intended to generate the authorization key. Further, by transmitting the receiving signal from the trusted authority the user equipment can be informed about a performed user binding. This way, the user equipment may be enabled to generate an authorization key, when receiving an invitation signal comprising information indicative of an invitation to generate an authorization key.

In an example, the processing circuitry 34 may be further configured to receive, from a device, an invitation signal comprising information indicative of an invitation to generate an authorization key and to generate an authorization key based on the received signal. The authorization key may be a digital key. This way, an authorization key, e.g., a digital key for a vehicle, can be generated by the secure element 30.

For example, the user equipment may be a communication device within the meaning of the respective communication standards being used for mobile communication, e.g., a mobile phone, such as a smartphone, or another type of mobile communication device, such as a smartwatch, a laptop computer, a tablet computer, or autonomous augmented-reality glasses.

As shown in Fig. 1 the respective interface circuitry 32 is coupled to the respective processing circuitry 34 at the secure element 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the secure element 30 may comprise a memory and at least one processing circuitry 34 operably coupled to the memory.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The secure element 30 may be a microprocessor, graphics processor unit (GPU), application-specific integrated circuit (ASICs), integrated circuits (IC), etc.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 7).

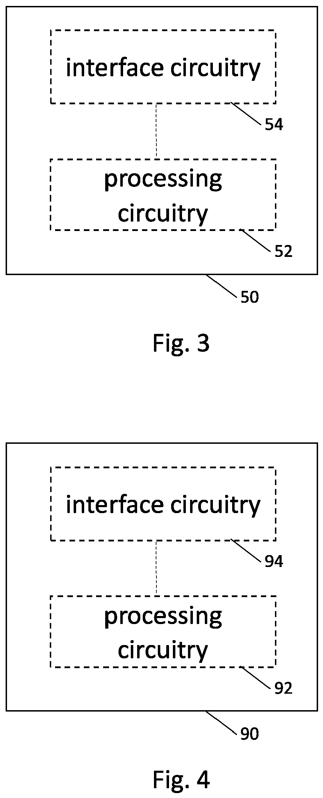

Fig. 2 shows a block diagram of an example of a trusted authority 10. The trusted authority 10 for improving an authorization process comprises interface circuitry 12 configured to communicate with a secure element and processing circuitry 14 configured to control the interface circuitry 12 and to receive an identifier signal from the secure element. The identification information may comprise at least one of an identifier of the secure element (e.g., a public key of a key pair (comprising also a private key) generated by the secure element) or a user binding information.. Further, the processing circuitry 14 is configured to perform a user binding of the secure element. This way, the user binding of the secure element can be performed by the trusted authority 10. By sharing the information about the user binding, the trusted authority 10 can enable a device (e.g., as described with respect to fig. 3) to check whether a secure element was intended to generate an authorization key (e.g., by transmitting an invitation signal to the intended secure element) or not (e.g., because an invitation signal was redirected or forwarded). The trusted authority 10 (also known as trusted third party) may be an entity, e.g., a server, a backend, a device which facilitates interactions between two parties, e.g., the device of fig. 3 and the secure element of fig. 1, who both trust the third party.

In an example, the processing circuitry 14 may be further configured to store information about the user binding in an instance certificate authority certificate. The instance CA certificate may comprise an identifier of a user of the user equipment. The identifier may be associated to information allowing an identification of an owner of a secure element, such like an email-address, a telephone number, an id card. The identifier may be obtained by user account binding. The user account binding may be performed by the processing circuitry 14 before performing the user binding. For example, the identifier from the user account binding may be used for the user binding, e.g., to associate the public key received from the secure element with the identifier, e.g., an information allowing to identify an owner of the secure element. For example, the user account binding may be performed by the processing circuitry 14 based on information of the user, e.g., email-address, a telephone number, an id card by generating an identifier allowing an association to the user. This way, a secure element used for a generation of an authorization key can be checked by using the instance CA certificate. The instance CA certificate may comprise the identifier (information related to the user) and the public key of the secure element.

For example, in the context of a digital key for vehicles the information about the user binding can be incorporated into the instance CA certificate described in [3], e.g., in Figure 6-5: Key Creation Data Transfer to Device. The instance CA certificate may be signed by the device OEM CA, as described in the Listing 15-15 in [1]. This way, the trusted authority 10 can incorporate the information of the user binding of the secure element to the user into the instance CA certificate known from [1]. Thus, the (new) instance CA certificate can be utilized to check whether an authorization key was generated by an intended user (bounded to a secure element) or not.

Optionally, the trusted authority 10 may communicate the information about the user binding, e.g., the instance CA certificate, to other entity, e.g., a backend, a smartphone, etc., to allow for the other entity to act as trusted authority 10, e.g., using a whitelist comprising the information received from the trusted authority 10. This way, the other entity can be configured in advance, e.g., by storing a whitelist of secure elements with associated users.

As shown in Fig. 2 the respective interface circuitry 12 is coupled to the respective processing circuitry 14 at the trusted authority 10. In examples the processing circuitry 14 may be implemented using one or more processing units, one or more processing devices, any means for processing, such as a processor, a computer or a programmable hardware component being operable with accordingly adapted software. Similar, the described functions of the processing circuitry 14 may as well be implemented in software, which is then executed on one or more programmable hardware components. Such hardware components may comprise a general-purpose processor, a Digital Signal Processor (DSP), a micro-controller, etc. The processing circuitry 14 is capable of controlling the interface circuitry 12, so that any data transfer that occurs over the interface circuitry 12 and/or any interaction in which the interface circuitry 12 may be involved may be controlled by the processing circuitry 14.

In an embodiment the trusted authority 10 may comprise a memory and at least one processing circuitry 14 operably coupled to the memory and configured to perform the ???below mentioned method.

In examples the interface circuitry 12 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 12 may be wireless or wireline and it may be configured to communicate, e.g., transmit or receive signals, information with further internal or external components.

The trusted authority 10 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 7).

Fig. 3 shows an example of a block diagram of a device 50. The device 50 for improving an authorization process comprises interface circuitry 52 configured to communicate with a database and processing circuitry 54 configured to control the interface circuitry 52. Further, the processing circuitry 54 is configured to transmit a request for identification information of a secure element to the database and receive an identification signal comprising information indicative of the identification information from the database. The identification information may comprise at least one of an identifier of the secure element (e.g., a public key of a key pair (comprising also a private key) generated by the secure element) or a user binding information. The identifier of the secure element can be a public key generated by the secure element in a key pair with a private key. The user binding information may comprise information of a performed user binding, e.g., performed by a trusted authority as described with reference to fig. 2. Thus, by incorporating the user binding information into the signal the device 50, e.g., a sharer, can be enabled to check whether an authorization key was generated by an intended secure element, e.g., the secure element as described with reference to Fig. 1.

For example, the device can be a communication device within the meaning of the respective communication standards being used for mobile communication, e.g., a mobile phone, such as a smartphone, or another type of mobile communication device, such as a smartwatch, a laptop computer, a tablet computer, or autonomous augmented-reality glasses. Alternatively, the device can be a server such like a backend.

The database may be an identity management database. The identity management database can be implemented by, e.g., a device OEM of the device 50 or a third party. For the identity management database user information (e.g. email address, phone number, identity certificate, etc.) can be mapped to an account id. This way, a distinct assignment of a user to a secure element can be provided. This database can be used for a specific use case, e.g., for the generation of an authorization key such like a digital key for a vehicle. Optionally, an existing identity management database can be reused, e.g., by extending the database by incorporating a new account id. For example, a user may have bought a smartphone with a secure element. Information about the smartphone and an assigned user (e.g., determined by a user binding) may be stored in the identity management database. Thus, the database can be used to introduce identification information, e.g., an accountId, specific to the use case (e.g., a digital car key generation for a vehicle).

The database can be comprised by or can be a trusted authority, e.g., as described with reference to fig. 2. Alternatively, the database can be stored on a smartphone, in a backend, e.g., to act as a whitelist.

The device 50 can request the identification information from the database. Thus, the identification information can be requested by the device 50 on demand. For example, a user of the device 50, e.g., a sharer, may want to provide a friend access to a vehicle, such that a generation of an authorization key, e.g., a digital key, may be required. Thus, before transmitting an invitation signal to a user equipment of the friend, e.g., a sharee, the sharer 50 may request an account id token (e.g., a onetimeAccountIdHash) from the identity management database. The requested account id token may be associated to an intended use case (e.g., the generation of a digital car key for vehicle). The request may be transmitted through a trusted channel. The sharer 50 may receive the account id of the sharee, especially of the secure element of the sharee, which could be used after receiving a generated digital key from the sharee to sign the received digital key. This way, the sharer 50 can check the generated digital key before signing the digital key based on the user binding information of the secure element. Thus, a check whether the digital key was generated by an intended sharee can be performed.

After receiving the identification signal the sharer 50 may initiate a key sharing flow comprising a generation of a digital key. The key sharing flow may be performed according to figure 11-1: Detail of Key Sharing Flow Between Owner and Friend Device After Channel is Established in [1].

In an example, the interface circuitry may be further configured to communicate with a secure element (e.g., a secure element as described with reference to fig. 1). The processing circuitry 54 may be further configured to transmit to the secure element an invitation signal comprising information indicative of an invitation to generate an authorization key, receive, from the secure element, a key signing request comprising information about a secure element used to generate an authorization key and check whether the information about the secure element matches the identification information and if the information matches indicate the authorization key as valid.

The invitation signal may be identical to step 3. Send invitation=urlLink and receive the key signing request may be identical to step 6. UpdateMailbox(payload=sharingKeySigningRequest, notificationToken) from figure 11-1 in [1]. Thus, the process from sending the invitation signal to the sharee to receiving the generated digital key from at the sharer 50 may be identical to the process described in [1].

Additionally, before signing the key signing request, the sharer 50 may verify that the sharees instanceCA certificate has been signed by the database, e.g., a device OEM CA that was cross signed by the vehicle OEM. This way, the sharer 50 can check that the accountID in the sharees instanceCA cert matches the account Id of the intended recipient. Thus, only an authorization key generated by the intended sharee could be signed by the sharer 50. A forwarded invitation signal which was received by a further secure element, not comprising the correct user binding (and thus not associated to the instance CA certificate of the database) could therefore not lead to a generation of an authorization key, which would be signed by the sharer 50, since the information received from the database would not match the information received from the key signing request. This way, unsure communication between different devices can be additionally secured by using the secure element which is harder to attack than the communication channel or the device alone.

In an example, the device 50 may further comprise a storage device. The database from which the identification information is to be requested may be stored in the storage device. Thus, a third party can utilize the information generated by the user binding. For example, user binding for digital key deployment by third party apps installed on the smart device of a sharer, e.g. car sharing apps, can utilize the identification information, e.g., generated by a trusted authority. The third party app could generate and retrieve the instance CA certificate through a dedicated application programming interface (API) in the smartphone's operating system from the database. Further, the third party app may link this instance CA certificate to the apps a user account. Whenever an authorization key is to be deployed to the device that the third party app is installed to, either the instance CA certificate or the accountID could be used to ensure the authorization keys are deployed on the correct device.

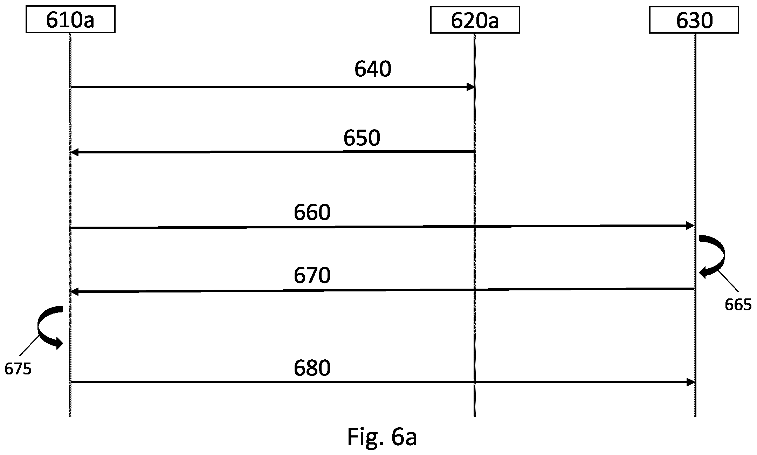

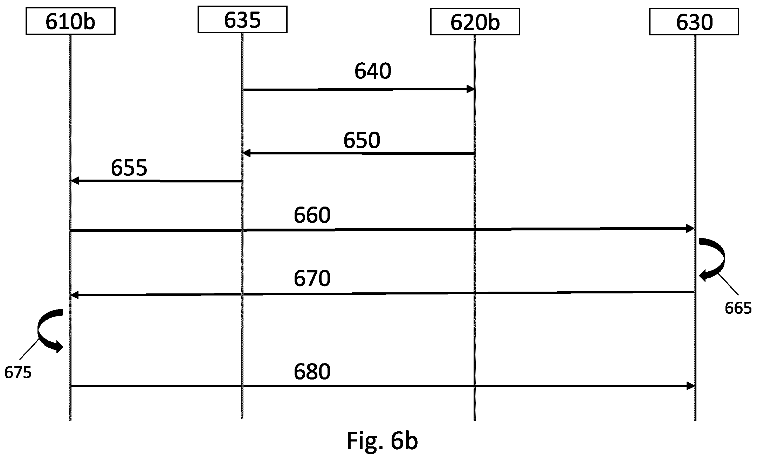

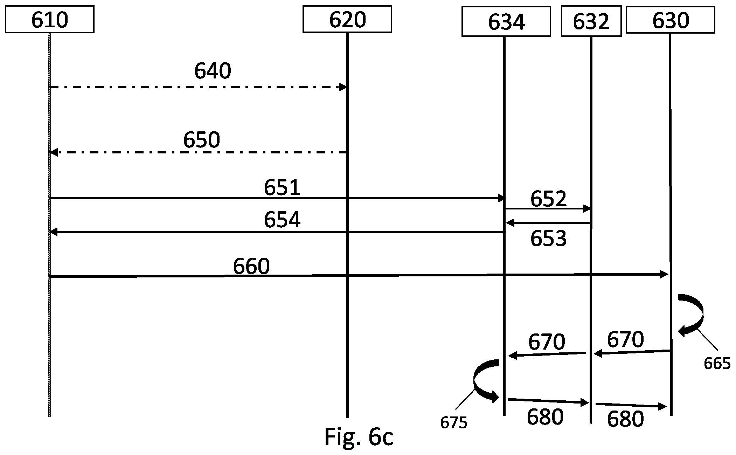

In an example, the interface circuitry may be further configured to communicate with a key management server. The processing circuitry 54 may be further configured to transmit, to the key management server, a request to create an invitation signal. The request comprises information indicative of the identification information and receive, from the key management server, a request response signal comprising information indicative for the invitation signal. This way, the task of generating an invitation signal can be shifted to the key management server (see also fig. 6).

Alternatively, in order to provide sufficient privacy, instead of using accountIDs, a use case specific accountID hash values and one time account ID hash values calculated from account ID and nonces could be used. This way, a privacy could be increased.

As shown in Fig. 3 the respective interface circuitry 52 is coupled to the respective processing circuitry 54 at the trusted authority 50. In examples the processing circuitry 54 may be implemented using one or more processing units, one or more processing devices, any means for processing, such as a processor, a computer or a programmable hardware component being operable with accordingly adapted software. Similar, the described functions of the processing circuitry 54 may as well be implemented in software, which is then executed on one or more programmable hardware components. Such hardware components may comprise a general-purpose processor, a Digital Signal Processor (DSP), a micro-controller, etc. The processing circuitry 54 is capable of controlling the interface circuitry 52, so that any data transfer that occurs over the interface circuitry 52 and/or any interaction in which the interface circuitry 52 may be involved may be controlled by the processing circuitry 54.

In an embodiment the trusted authority 50 may comprise a memory and at least one processing circuitry 54 operably coupled to the memory and configured to perform the below mentioned method.

In examples the interface circuitry 52 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 52 may be wireless or wireline and it may be configured to communicate, e.g., transmit or receive signals, information with further internal or external components.

The trusted authority 50 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 7).

Fig. 4 shows a block diagram of an example of key management server 90. The key management server 90 for improving an authorization process comprises interface circuitry 92 configured to communicate with a secure element, e.g., as described with reference to fig. 1 and a device, e.g., as described with reference to fig. 3, and processing circuitry 94 configured to control the interface circuitry 92. Further, the processing circuitry 94 is configured to receive, from the device, a request to create an invitation signal. The request comprises information indicative of identification information. Further, the processing circuitry 94 is configured to transmit a request response signal comprising information indicative for the invitation signal, receive, from the secure element, a key signing request comprising information about a secure element used to generate an authorization key and compare the secure element information with the identification information. This way, the key management server can perform a signation of the authorization key generated by a secure element. Thus, not the device, e.g., a sharer, alone as described with reference to fig. 3 may sign the authorization. Moreover, the key management server 90 is enabled to check whether an authorization key was generated by an intended secure element of a sharee. Further, if the check matches the key management server can sign the generated authorization key.

As shown in Fig. 4 the respective interface circuitry 92 is coupled to the respective processing circuitry 94 at the trusted authority 90. In examples the processing circuitry 94 may be implemented using one or more processing units, one or more processing devices, any means for processing, such as a processor, a computer or a programmable hardware component being operable with accordingly adapted software. Similar, the described functions of the processing circuitry 94 may as well be implemented in software, which is then executed on one or more programmable hardware components. Such hardware components may comprise a general-purpose processor, a Digital Signal Processor (DSP), a micro-controller, etc. The processing circuitry 94 is capable of controlling the interface circuitry 92, so that any data transfer that occurs over the interface circuitry 92 and/or any interaction in which the interface circuitry 92 may be involved may be controlled by the processing circuitry 94.

In an embodiment the trusted authority 90 may comprise a memory and at least one processing circuitry 94 operably coupled to the memory and configured to perform the ???below mentioned method.

In examples the interface circuitry 92 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 92 may be wireless or wireline and it may be configured to communicate, e.g., transmit or receive signals, information with further internal or external components.

The trusted authority 90 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

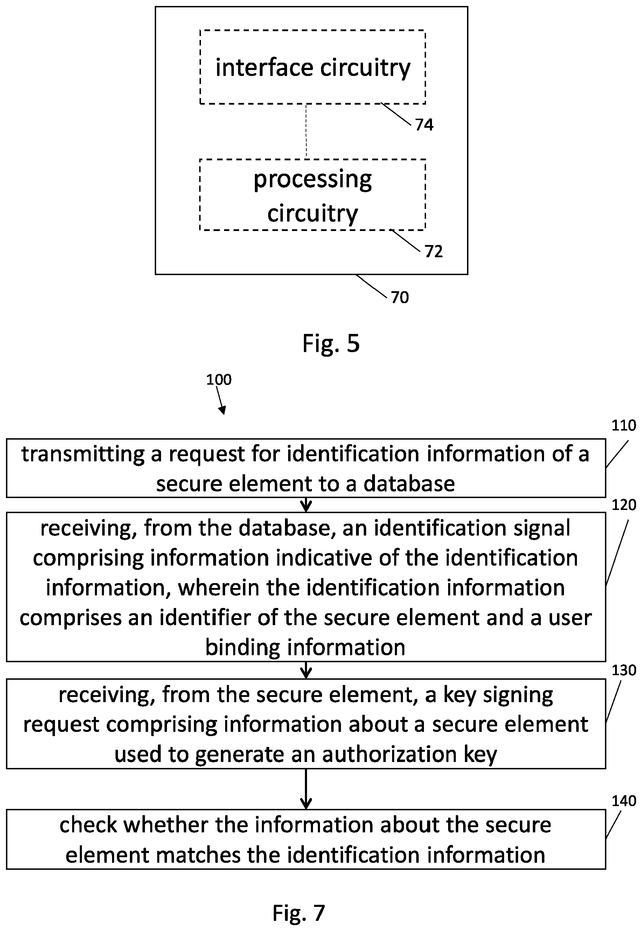

More details and aspects are mentioned in connection with the embodiments described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5 - 7).

Fig. 5 shows a block diagram of an example of a backend 70.The backend 70 for improving an authorization process comprises interface circuitry 72 configured to communicate with a secure element, e.g., as described with reference to fig. 1 and a device, e.g., as described with reference to fig. 3, and processing circuitry 74 configured to control the interface circuitry 72. Further, the processing circuitry 74 is configured to receive an identification signal, from the device, comprising information indicative of the identification information from, receive, from the secure element, a key signing request comprising information about a secure element used to generate an authorization key and compare the secure element information with the identification information. This way, the backend 70 can perform a signation of the authorization key generated by a secure element. For example, the backend may be an alternative to the key management server as described above.

As shown in Fig. 5 the respective interface circuitry 72 is coupled to the respective processing circuitry 74 at the trusted authority 70. In examples the processing circuitry 74 may be implemented using one or more processing units, one or more processing devices, any means for processing, such as a processor, a computer or a programmable hardware component being operable with accordingly adapted software. Similar, the described functions of the processing circuitry 74 may as well be implemented in software, which is then executed on one or more programmable hardware components. Such hardware components may comprise a general-purpose processor, a Digital Signal Processor (DSP), a micro-controller, etc. The processing circuitry 74 is capable of controlling the interface circuitry 72, so that any data transfer that occurs over the interface circuitry 72 and/or any interaction in which the interface circuitry 72 may be involved may be controlled by the processing circuitry 74.

In an embodiment the trusted authority 70 may comprise a memory and at least one processing circuitry 74 operably coupled to the memory and configured to perform the ???below mentioned method.

In examples the interface circuitry 72 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 72 may be wireless or wireline and it may be configured to communicate, e.g., transmit or receive signals, information with further internal or external components.

The trusted authority 70 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described above and/or below. The example shown in Fig. 5 may comprise one or more optional additional features corresponding to one or more aspects mentioned in connection with the proposed concept or one or more examples described above (e.g., Fig. 1 - 4) and/or below (e.g., Fig. 6 - 7).

Figs. 6a - 6c show flow diagrams of an example of a method 600 of an authorization key sharing flow. Fig. 6a shows an example of an authorization key sharing flow in which a sharer 610a (e.g., a device as described with reference to fig. 3), an (account) database 620a (e.g., a trusted authority as described with reference to fig. 2, such like a device OEM) and a sharee 630 (e.g., a user equipment comprising a smartphone) are involved.

Prior to starting an authorization key generation by transmitting an invitation signal, the sharer 610a may request information about a sharee 630 to which the sharer 610a wishes to direct the authorization key. This way, the sharer 630 can receive information from the database 620a about an intended sharee 630. In 640 the sharer 610a may transmit a request for identification information of a secure element of the sharee 630 to the database 620a. The request may comprise data indicative of a or may be a getAccountIdHash. User data of the secure element of the sharee 630 which could be requested by the request may be determined by a user binding as described above. For example, requested data may comprise information indicative for an email-address of the user, a telephone number of the user, an id-card number of the user, a public key of the sharee 630, a specific use case, a vehicle OEM). The database 620a may response to the request by transmitting in 650 an identification signal comprising information indicative of the identification information to the sharer 610a. The identification signal may comprise or may be an OnetimeAccountIdHash, nonce (to increase a privacy) or a InstanceCACert, e.g., AccountIDHash. For example, the OnetimeAccountIdHash = hash(AccountIdHash, nonce), where AccountIdHash = hash(iCouldAccountId, vehicleOEM = a vehicle manufacturer). The identification information may comprise at least one of an identifier of the secure element (e.g., a public key of a key pair (comprising also a private key) generated by the secure element) or a user binding information.. Thus, the sharer 610a receives identification information from the database 620a which can be used to improve an authorization key signation.

In 660 an invitation signal is transmitted to the sharee 630 from the sharer 610a according to [1]. Further, in 665 an authorization key creation is performed, e.g., the sharee generates an authorization key, e.g. a digital key, according to [1]. In 670 the sharee 630 transmits a key signing request according to [1] to the sharer 610a.

In 675 the sharer 610a may check whether the information about the secure element matches the identification information received from the database 620. For example, the sharer may check if hash(accountIdHash, nonce) from instanceCA matches OnetimeAccountIdHash. If both mathches the sharer 610 may proceed as usual, e.g., sign the generated authorization key from the sharee 630, else the sharer 610 may not sign the authorization key and may end the key generation flow without singing a generated authorization key. Thus, by using the identification information provided by the database 620a for verifying the information about the secure element a signature of the generated authorization key (e.g., the digital key) can be improved. If the identification information matches the information about the secure element the generated authorization key may be indicated as valid, e.g., a signature may be performed by the sharer 610a. This way, the sharer can compare a secure element which has generated the authorization with an intended secure element the invitation signal was addressed to by using the identification information received from the database 620a.

In 680 a MailboxImportRequest is transmitted to the sharee 630 from the sharer 610a according to [1].

Fig. 6b shows another example of an authorization key sharing flow in which a sharer 610b (e.g., a backend, e.g., of a car sharing provider), an (account) database 620 (e.g., a trusted authority as described with reference to fig. 2, such like device operation system (OS)), a sharee 630 (e.g., a user equipment comprising a smartphone) and a user equipment 635 comprising a storage device with a stored car sharing app are involved. In contrast to fig. 6a the request for identification information is in 640 transmitted from the smartphone of the user to the device OS 620b. The device OS 620b may have a storage medium in which a database, e.g., a look-up-table is stored comprising information about secure elements and users bounded to the secure elements. For example, the device OS may have received the database from a trusted authority as described with reference to fig. 2 and thus may act as a trusted authority, e.g., based on a whitelist.

Thus, the device OS 620 may transmit in 650 an identification signal comprising information indicative of the identification information to the user equipment 635. The user equipment 635 may forward in 655 identification information to the sharer 620b. This way, the sharer 620b, e.g., the backend 620b, may be enabled to check whether the information about the secure element matches the identification information received from the database. Thus, user binding for digital key deployment by third party apps installed on the user equipment 635 of a sharer, e.g. car sharing apps, can utilize the identification information, e.g., generated by a trusted authority.

Fig. 6a shows an example of an authorization key sharing flow in which a sharer 610a (e.g., a device as described with reference to fig. 3), an (account) database 620a (e.g., a trusted authority as described with reference to fig. 2, such like a device OEM) and a sharee 630 (e.g., a user equipment comprising a smartphone) are involved. In contrast to fig. 6c further a relay 632 and a key management server 634 are involved. In 651 the sharer 630 transmits a requestKey (comprising e.g., OnetimeAccountIdHash, nonce) to the key management server 634. The key management server 634 may relay in 652 this request to a relay 632 and may receive in 653 a requestKey response signal from the relay 632. In 654 the key management server 634 transmits the requestKey response to the sharer. The sharer 610 sends in 660 an invitation signal to the sharee 630 and in 670 the key signing request is transmitted from the sharee 630 to the key management server 634. In 675 key management server 634 may check whether the information about the secure element matches the identification information received from the database 620 and in 680 a MailboxImportRequest is transmitted to the sharee 630 from the key management server 634 according to [1]. Thus, the check for signing the generated authorization key can be performed by the key management server 634 instead of the sharer 610.

More details and aspects are mentioned in connection with the embodiments described above and/or below. The example shown in Fig. 6 may comprise one or more optional additional features corresponding to one or more aspects mentioned in connection with the proposed concept or one or more examples described above (e.g., Fig. 1 - 5) and/or below (e.g., Fig. 7).

Fig. 7 shows an example of a method 100. The method 100 for improving an authorization process comprises transmitting 110 a request for identification information of a secure element to a database and receiving 120, from the database, an identification signal comprising information indicative of the identification information. The identification information may comprise at least one of an identifier of the secure element (e.g., a public key of a key pair (comprising also a private key) generated by the secure element) or a user binding information.. Further, the method 100 comprises receiving 130, from the secure element, a key signing request comprising information about a secure element used to generate an authorization key and comparing 140 the secure element information with the identification information. For example, the method 100 may be performed by a device as described with reference to fig. 3.

More details and aspects are mentioned in connection with the embodiments described above. The example shown in Fig. 7 may comprise one or more optional additional features corresponding to one or more aspects mentioned in connection with the proposed concept or one or more examples described above (e.g., Fig. 1 - 6).

### References

10 trusted authority
12 interface circuitry
14 processing circuitry
30 secure element
32 interface circuitry
34 processing circuitry
50 device
52 interface circuitry
54 processing circuitry
70 backend
72 interface circuitry
74 processing circuitry
90 key management system
92 interface circuitry
94 processing circuitry
610, 610a, 610b sharer
630 sharee
640 request AccountIdHash
650 receive OnetimeAccountIdHash, nonce or AccountIDHash
651 transmitting a requestKey
652 relaying the requestKey
653 transmitting a requestKey response signal
654 relaying the requestKey response signal
655 forward identification information
660 transmitting invitation signal
665 authorization key creation
670 transmitting key signing request
675 check whether the information about the secure element matches the identification information
680 transmit MailboxImportRequest

## Claims

1. A secure element (50) of a user equipment for improving an authorization process, comprising; interface circuitry (52) configured to communicate with a trusted authority; and
processing circuitry (54) configured to control the interface circuitry (52) and to receive a signal from the trusted authority, wherein the signal comprises information indicative of a user binding to the secure element.

2. The secure element (50) according to claim 1, wherein
the processing circuitry (52) is further configured to:
receive, from a device, an invitation signal comprising information indicative of an invitation to generate an authorization key; and
generate an authorization key based on the received invitation signal, wherein
the authorization key is a digital key.

3. A trusted authority (10) for improving an authorization process, comprising interface circuitry (12) configured to communicate with a secure element; and
processing circuitry (14) configured to control the interface circuitry (12) and to:
receive an identifier signal from the secure element, wherein the identifier signal comprises information indicative of an identifier of the secure element; and
perform a user binding of the secure element.

4. The trusted authority (10) according to claim 3, wherein
the processing circuitry (14) is further configured to store information about the user binding in an instance certificate authority certificate.

5. A device (30) for improving an authorization process, comprising;
interface circuitry (32) configured to communicate with a database; and
processing circuitry (34) configured to control the interface circuitry (32) and to:
transmit a request for identification information of a secure element to the database; and
receive an identification signal comprising information indicative of the identification information from the database, wherein the identification information comprises at least one of an identifier of the secure element or a user binding information.

6. The device (30) according to claim 5, wherein
the interface circuitry (32) is further configured to communicate with a secure element and; wherein
the processing circuitry (34) is further configured to:
transmit to the secure element an invitation signal comprising information indicative of an invitation to generate an authorization key;
receive, from the secure element, a key signing request comprising information about a secure element used to generate an authorization key; and
check whether the information about the secure element matches the identification information and
if the information matches indicate the authorization key as valid.

7. The device (30) according to one of the claims 5 - 6, wherein the device (30) further comprises a storage device and wherein
the database from which the identification information is to be requested is stored in the storage
device.

8. The device (30) according to claim 5 - 7, wherein
the interface circuitry (32) is further configured to communicate with a key management server; and wherein
the processing circuitry (34) is further configured to:
transmit, to the key management server, a request to create an invitation signal, wherein the request comprises information indicative of the identification information; and
receive, from the key management server, a request response signal comprising information indicative for the invitation signal.

9. A key management server (90) for improving an authorization process; comprising
interface circuitry (92) configured to communicate with a secure element and a device according to one of the claims 5 - 8; and
processing circuitry (94) configured to control the interface circuitry (92) and to:
receive, from the device, a request to create an invitation signal, wherein the request comprises information indicative of identification information;
transmit a request response request comprising information indicative for the invitation signal;
receive, from the secure element, a key signing request comprising information about a secure element used to generate an authorization key; and
compare the secure element information with the identification information.

10. A backend (70) for improving a security of a digital key generation; comprising
interface circuitry (72) configured to communicate with a secure element and a device according to one of the claims 5 - 8; and
processing circuitry (74) configured to control the interface circuitry (72) and to:
receive an identification signal, from the device, comprising information indicative of the identification information from;
receive, from the secure element, a key signing request comprising information about a secure element used to generate an authorization key; and
compare the secure element information with the identification information.

11. A method (100) for improving an authorization process, comprising:
transmitting a request for identification information of a secure element to a database;
receiving, from the database, an identification signal comprising information indicative of the identification information, wherein the identification information comprises an identifier of the secure element and a user binding information;
receiving, from the secure element, a key signing request comprising information about a secure element used to generate an authorization key; and
check whether the information about the secure element matches the identification information.

12. A computer program having a program code for performing the method (100) according to claim 11, when the computer program is executed on a computer, a processor, or a programmable hardware component.
